# EUROPEAN PATENT SPECIFICATION

(11) **EP 2 497 839 B1**
(45) Date of publication and mention of the grant of the patent: **11.04.2018**
(21) Application number: 12157377.8
(22) Date of filing: 28.02.2012
(51) Int. Cl.: C21D 1/06, C21D 1/76, C21D 9/00, C21D 9/32, C21D 11/00, C23C 8/18, C23C 8/22, C23C 8/26, C23C 8/32, C23C 8/34

(54) **Method for the treatment of steels**
Verfahren zur Behandlung von Stählen
Procédé pour le traitement des aciers

(30) Priority: 10.03.2011 IT MI20110366
(43) Date of publication of application: 12.09.2012
(73) Proprietor: SOL S.p.A., 20052 Monza MI (IT)
(72) Inventor: Gandola, Andrea, 22100 COMO (IT)
(74) Representative: Modiano, Micaela Nadia

(56) References cited:
- EP-A1- 0 655 512
- EP-A1- 0 859 068
- EP-A2- 0 299 625
- EP-A2- 1 264 915
- WO-A2-2007/062008
- US-A- 4 702 779
- US-A1- 2005 028 891
- US-B1- 6 328 819
- LERCHE W ET AL: "VERFAHRENSTECHNISCHE MOEGLICHKEITEN ZUR ERZEUGUNG NACHOXIDIERTER VERBINDUNGSSCHICHTEN MIT HOHER KORROSIONSFESTIGKEIT", HTM HAERTEREI TECHNISCHE MITTEILUNGEN: ZEITSCHRIFT FUER WERKSTOFFE, WAERMEBEHANDLUNG UND FERTIGUNG, CARL HANSER VERLAG, MUNCHEN, DE, vol. 57, no. 5, 1 January 2002 (2002-01-01), pages 349-356, XP001140763, ISSN: 0341-101X

## Description

The present invention relates to a method for the treatment of a carbon steel that comprises carburizing, carbonitriding and/or tempering, followed by passivation/blueing provided directly in the same furnace as the previous treatment, to an apparatus for said method and to the use of said method.

Thermal treatments are constituted by a number of processes which are performed in adapted furnaces and which consist in subjecting the metals to be treated to thermal cycles (usually heating, temperature holding and cooling) in order to give them the desired chemical, physical and structural proprieties. The process temperatures and the duration of the single steps are a function of the goal that the treatments seek to achieve and of the chemical composition of the gas mixture that must be fed in the furnaces.

In general, at the temperatures usually used for these treatments the presence of air or other oxidizers inside the furnaces causes oxidation phenomena with consequent worsening of the structural characteristics of the metals. However, if the oxidation process of the metal is controlled, it is possible to form metal oxides on the surface of the metal that give it greater resistance to corrosion and wear, as well as an esthetic improvement.

In the specific case of carbon steels, the thermal treatment of carburizing (and by analogy the carbonitriding treatment) consists of a surface hardening of the metals by way of carbon diffusion inside them, which is already disclosed in IT1356506 and EP796919 (both methods are known by the trade name SOLMIX). The goal of this treatment is to modify the chemical composition of the metal by precipitating carbides that give a high surface hardness. The thermal treatment of passivation/blueing consists instead in forming an oxide layer, the composition of which is mainly a function of the type of material treated and of the treatment temperature, and which, by adhering perfectly to the surface of the metal, prevents a subsequent oxidation thereof, increasing its resistance to wear.

Technologies for the surface treatment of metals such as phosphatizing or burnishing, or processes based on the use of oxidizers such as air, water, carbon dioxide, alcohols or mixture thereof, have long been known.

The processes of phosphatizing and burnishing are performed usually at low temperature (considerably lower than the austenitizing temperature of steels) with spray or immersion units. Merely by way of example, one can mention water baths with lead acetate and sodium hyposulfite or spray solutions of zinc phosphate, manganese or nickel.

These techniques suffer, among others, the following drawbacks:
- high difficulty in controlling the variables that regulate the process during the step of passivation/blueing;
- emissions of reagents and chemical substances are generated which entail disposal costs and high environmental impact;
- the oxidizing baths and the spray units require special apparatuses, which entail substantial economic investments and dedicated resources;
- the duration of the treatment requires relatively long times, for example up to two hours. The duration of the oxidation treatment of a metal is a function not only of the method used and of the material, but also of the color that one wishes the part to assume. Depending on the retention time of a metal in an oxidizing bath, it is in fact possible to achieve different colorings. The problem of time is much more important when one considers processes with oxidizers such as water, which are performed in treatment furnaces that are different from the original carburizing furnace. By using the background art, before proceeding with the oxidation treatment, which follows carburizing, one must wait for the step of oil quenching, drying, extraction of the load from the original furnace and placement in the second oxidation furnace. The longer time required is due more to the double passage than to the retention time in the tanks from when the part has been carburized and when it is arranged in the second furnace.

The more widespread passivation/blueing technologies are based on the use of oxidizers such as water, carbon dioxide or air and require usually an additional furnace with respect to the one used for carburizing, carbonitriding and/or tempering, entailing therefore a dedicated investment.

Such furnace, in order to comply with the characteristics of the treatment, must be perfectly atmosphere-tight and must have working temperatures comprised between approximately 370°C and 600°C. In the process, the oxidizer is injected with methods and times that are a function of its oxidizing power. At the end of the passivation/blueing step, a layer of oxide is formed which covers the surface of the metal.

Some processes, such as for example the ones disclosed in EP647726 and EP1019561, perform the oxidation of metal in a single furnace directly after the step of carburizing, carbonitriding and/or tempering and at the austenitization temperature of steel (typically 800°C-900°C), using water or water/methyl alcohol mixtures as oxidizer. In these processes, the unwanted phenomenon of impregnation with humidity of the refractory material of the thermal treatment chamber occurs, forcing the operator to substantial operations for cleaning the furnace with inert and anhydrous gas. Moreover, the oil quenching step that follows carburizing and passivation/blueing is particularly crucial from the safety point of view. The load of metallic material, previously oxidized in presence of water or water solutions or humid gases, inevitably has on its surface traces of humidity which, when they come into contact with the hot oil bath (usually at 100°C), produce dangerous liquid and gaseous emissions at high temperature. Documents US 2005/0028891, EP 0 299 625 and EP 0 655 512 disclose processes and apparatuses for surface treatment and final blueing within the same multi-purpose vessels and disposing control systems for regulating the working atmospheres. The aim of the present invention is to provide a method for the treatment of a carbon steel that overcomes the drawbacks of the background art.

Another object of the present invention is to provide an apparatus for implementing said method.

Another object of the present invention is to use said method in the production of metallic manufactured articles.

This aim and these and other objects that will become better apparent hereinafter, are achieved by a method for the treatment of a carbon steel, according to claim 1 comprising the steps of:
a) at least one thermal treatment of the carbon steel, selected from carburizing, carbonitriding and tempering, performed in a treatment furnace;
b) a subsequent thermal treatment of passivation/blueing of the carbon steel treated in step a), said subsequent thermal treatment being performed directly in said furnace of the treatment a), at a temperature comprised between 800°C and 900°C, in an atmosphere comprising nitrogen and at least one of carbon dioxide, nitrous oxide, or mixtures thereof.

Moreover, the aim and objects of the present invention have been achieved by means of an apparatus according to claim 10 for carrying out said method, comprising at least one gas mixing system, at least one furnace for thermal treatment of carbon steel, at least one system for analyzing and controlling the flow-rates of the gases and the process parameters of said method, and optionally at least one catalytic reactor that comprises means adapted to supply heat energy.

Moreover, the aim and objects of the present invention have been achieved by the use of said method in the production of gears, valves and other parts made of carbon steel.

Further characteristics and advantages of the present invention will become better apparent from the detailed description of a preferred but not exclusive embodiment, illustrated by way of non-limiting example in the drawings, which illustrate an apparatus according to the invention.

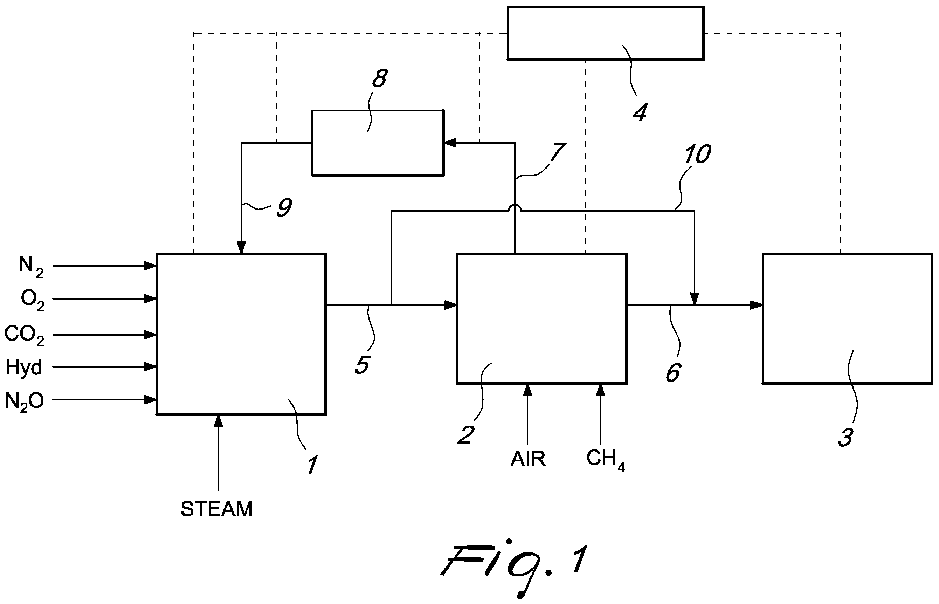

With particular reference to Figure 1, the gas mixing system is designated by the reference numeral 1, the catalytic reactor is designated by the reference numeral 2, the thermal treatment furnace is designated by the reference numeral 3, the analyzing and controlling system connected at at least one gas analyzer is designated by the reference numeral 4, the dehydration chamber is designated by the reference numeral 8, the gas mixture sent to the catalytic reactor is designated by the reference numeral 5, the gas mixture sent to the thermal treatment furnace is designated by the reference numeral 6, the mixture that comprises water, at least one inert agent and carbon dioxide produced by combustion in presence of an inert agent, of a hydrocarbon and of oxygen is designated by the reference numeral 7, and the mixture in output from the dehydration chamber and without most of the water present in the mixture 7 is designated by the reference numeral 9.

In step b) of the treatment according to the invention, the mixture obtained in 1 is inserted directly in the treatment furnace 3 by means of the bypass line 10 of the reactor 2.

Within the scope of the present invention, the expression "carbon steel" designates a steel the main alloying element of which is carbon, for example a steel in which at least 50% by weight of the the total weight of all the alloying elements is carbon.

More generally, non-stainless steels are termed carbon steels.

Within the scope of the present invention, the expression "catalytic reactor" designates a generic reactor inside which a chemical reaction takes place in the presence of a catalyst.

Finally, the concept of "carbon potential" is defined hereinafter.

Consider the following reaction that occurs inside the treatment furnace 3:

### a) Boudouard Equilibrium

*2CO* ↔ *CO₂* + *C*

the ratio between the partial pressures of the carbon monoxide and of the carbon dioxide (*p²CO*/*pCO₂*) for each temperature value assumes a value that establishes a condition of equilibrium. The addition or elimination of carbon dioxide and oxygen shifts this equilibrium a) to the right or to the left, giving the final mixture more or less carbiding characteristics. In the same manner, the addition or elimination of nitrous oxide shifts the equilibrium a) to the right or to the left, giving the final mixture more or less carbiding and/or oxidizing characteristics.

Such aptitude, which is a function of the carbon monoxide and carbon dioxide content and of temperature, is termed "carbon potential" and is determined empirically for each specific case by means of mathematical methods based on experimental variables such as carbon monoxide and carbon dioxide content and temperature.

In one aspect, the present invention relates to a method (termed SOLMIX B) for the treatment of a carbon steel that comprises the steps of:
a) at least one thermal treatment of the carbon steel, selected from carburizing, carbonitriding and tempering, performed in a treatment furnace;
b) a subsequent thermal treatment of passivation/blueing of the carbon steel treated in step a), the subsequent thermal treatment being performed directly in the furnace of the treatment a) at a temperature comprised between 800°C and 900°C in an atmosphere comprising nitrogen and at least one of carbon dioxide, nitrous oxide, or mixtures thereof.

Preferably, in step b) of the process the atmosphere comprises nitrous oxide. Nitrous oxide has a smaller decarburizing effect on the atmosphere than carbon dioxide. Fort this reason, if one does not wish to decarburize excessively the material to be subjected to thermal treatment, nitrous oxide is particularly advantageous.

The three thermal treatments of step a) may be performed at a temperature comprised between 850°C and 1000°C. The three treatments mentioned can be grouped in a single family of thermal treatments that are performed by using the carbon potential as a reference parameter. Merely by way of example, other thermal treatments such as nitriding use as critical parameters other potentials, for example the nitriding potential, which are controlled during the process.

The method of the present invention has advantages with respect to the background art used for the thermal treatment of passivation/blueing performed at austenitization temperature and following a carburizing, carbonitriding and/or tempering. For example, the method according to the present invention makes it possible to control and manage the variables that rule the process of passivation/blueing, such as the temperature, the composition of the reacting mixture and produced mixture and the carbon potential also during the passivation/blueing step. Other advantages with respect to the methods of the background art are, for example, the absence of emissions of reagents or chemical substances, the fact that an oxidizing bath or spray system is not necessary and the significant reduction of the duration of the thermal treatment. Moreover, in particular with respect to passivation/blueing technologies performed at austenitization temperature in the presence of water or water/methyl alcohol mixtures, the method according to the present invention makes it possible to eliminate the unwanted phenomenon of humidity impregnation of the refractory material of the thermal treatment chamber that forces the operator to substantial cleaning operations of the furnace with inert and anhydrous gas. Moreover, since water is not used in the steps of carburizing and passivation/blueing, it is possible to operate in conditions of greater safety in the subsequent step of oil quenching.

Further advantages of the method of the invention with respect to the technologies of the background art that use gas are linked to the accurate monitoring of the thermal treatment, rendered possible by a suitable gas mixing system integrated and controlled by an analysis and control system.

Preferably, during the step b) of the process, the composition of the atmosphere of the treatment furnace is monitored and adjusted continuously.

Preferably, in such method the composition of the atmosphere of the treatment furnace is adjusted by varying the flow-rates of nitrogen, and at least one of carbon dioxide, nitrous oxide or mixtures thereof entering a gas mixer to prepare a mixture of gases that is fed into the furnace during step b), preferably by means of a programmable logic controller (PLC).

In the method of the invention it is possible to use a mixing system and an analysis and control unit that comprises at least one gas analyzer, capable of managing also a catalytic reactor inside which separate/combined reactions of partial oxidation of methane and/or methane dry reforming with carbon dioxide occur, leading to the formation of mixtures known as syngas, as described hereinafter, of variable composition and flow-rate, specific for the different thermal treatments of carburizing, carbonitriding and/or tempering; this integrated system is disclosed in IT1356506 and EP796919 by SOL S.p.A.

The mixing system 1, described in detail hereinafter, enables to mix suitable quantities of reagents such as nitrogen, oxygen, nitrogen/oxygen mixtures, air, hydrocarbons (predominantly methane or propane), carbon dioxide and nitrous oxide in order to produce two different types of mixture. The first one, which is suitable for the carburizing, carbonitriding and/or tempering treatment, is a mixture known as syngas, and the second one, which is suitable for the passivation/blueing step, is based on nitrogen and at least one among carbon dioxide, nitrous oxide or mixtures thereof.

The analysis and control system 4, described in detail hereinafter, enables to manage in a suitable manner the production of mixture during both treatment steps by means of the continuous analysis of carbon monoxide, carbon dioxide, methane and oxygen. The system, also by means of continuous temperature control, is capable of establishing in an accurate manner the carbon potential of the mixture in the furnace and manage correctly the progress of the formation of carbides and oxide during the steps of carburizing and subsequent passivation/blueing.

Preferably, in the method according to the invention the treatment of step a) occurs in the presence of a gas mixture that comprises nitrogen and at least one of carbon monoxide, hydrogen or mixtures thereof, the method further comprising the detection and continuous adjustment of the composition of the gas mixture during step a) so as to maintain the carbon potential of the gas mixture at a preset value. The value of the carbon potential is kept constant by acting on the stoichiometric ratio of the reacting gases, mainly air and hydrocarbons. If the reagent mixture is constituted by air and methane among the hydrocarbons, the stoichiometric ratio would be close to 2.5. In order to increase/decrease the carbon potential, this ratio should be reduced/increased by modifying the flow-rates of the mentioned reagent gases.

Preferably, in the method according to the invention, the gas mixture that enters the treatment furnace in step a) is obtained in a catalytic reactor and the composition of the gas mixture that enters the thermal treatment furnace in step a) is adjusted by varying the flow-rate and the composition of a flow of gas that comprises nitrogen, oxygen, carbon dioxide and hydrocarbon entering the catalytic reactor, or by varying the flow-rates of the components of the gas flow that enters a gas mixer to prepare a mixture of gases that is fed into the catalytic reactor, preferably by means of a programmable logic controller (PLC). Such monitoring is performed by analyzing the content of carbon monoxide and carbon dioxide by means of an infrared gas mixture analyzer, the content of oxygen by means of a lambda-probe or an oxygen probe, as well as the temperature by means of thermocouples.

The value of carbon potential can be established, for example, also as a function of the type of steel to be treated and of the treatment considered, and kept constant by modifying the composition of the gas mixture that enters the thermal treatment furnace. The PLC (programmable logic controller) of the system receives the treatment temperature information from the furnace and, by using the data of the concentrations of the gases that arrive from the CO, CO₂ and CH₄ analyzer, and the data that correspond to the O₂ content detected by the lambda-probe or oxygen probe, adjusts the quantities of reagents to be sent to the mixing unit to obtain the desired layer of carbides and oxide.

The partial oxygen pressure is inferred from the value of the electrical signal sent by a lambda-probe or by an oxygen probe, the signal being expressed in volts.

Preferably, in such method the composition of the atmosphere of the treatment furnace in step b) is analyzed by using an analyzer selected from a lambda-probe or an oxygen probe and is adjusted so that the value of the signal that originates from the analyzer is comprised between 870 mV and 960 mV. The atmosphere fed in step b) is constituted by at least one gas among nitrogen, carbon dioxide, nitrous oxide or mixtures thereof. Without being limited by theory, the carbon dioxide, the nitrous oxide and any mixtures thereof have the property of releasing oxygen into the atmosphere, which has the purpose of oxidizing the surface of the carbon steel (blueing/passivation). The formation of oxygen by the gases carbon dioxide, nitrous oxide or mixtures thereof shifts the equilibriums of the reactions that occur inside the treatment furnace, comprising the Boudouard equilibrium. It follows that also during step b) the carbon potential is modified and for this reason must be kept at constant and desired values. Unlike the content of carbon dioxide, the nitrous oxide content is not analyzed directly, but is analyzed indirectly by means of the measurement of the oxygen that it releases and that reacts in order to form, in turn, carbon dioxide.

The first step of carburizing treatment occurs at a temperature comprised between 850°C and 1000°C, preferably between 900°C and 950°C, inside a thermal treatment furnace 2 in the presence of a mixture based on nitrogen and at least one of carbon monoxide, hydrogen or mixtures thereof. This mixture is well-known to be termed syngas. If the syngas mixture is produced by an endothermic generator, flows of nitrogen (N₂), oxygen and carbon dioxide (CO₂) in the gaseous state and a flow of at least one hydrocarbon (such as natural gas, methane, propane or other hydrocarbons C₁-C₄) are sent inside a mixing system 1. The nitrogen and oxygen reagents can be fed as individual gases separately or can be present in the form of air or nitrogen/oxygen mixtures with different percentages of oxygen produced previously by known apparatuses.

The ratios between the flow-rates of the gases of the various steps of the process are established and managed by the analysis and control system 4 as a function of the final composition of the required mixture 6, which in turn is a function of the thermal treatment for which it is intended. In the first step of the process, the mixture 5 is sent into a catalytic reactor 2, inside which the reactions of partial oxidation of the hydrocarbon and dry reforming of the hydrocarbon with carbon dioxide take place.

Preferably, in the method the flow-rate of the flow of gas that enters the catalytic reactor is managed by an analysis and control system capable of varying the flow-rates of the gaseous components of the flow.

Preferably, in the method of the invention the mentioned variables are constantly measured and controlled by the analysis system 4, which is connected to at least one gas analyzer, which adjusts them depending on the preset purposes.

The produced mixture 6 is sent to the thermal treatment furnaces 3, where it is drawn, further analyzed by the analysis and control system 4, and if necessary, its composition is modified by acting on the mixing system 1.

Once the first step of thermal treatment with controlled carbon potential, performed for example as disclosed in IT1356506 and EP796919, has ended, the treatment furnace reaches the blueing temperature, which is comprised generally between 800°C and 900°C depending on the material.

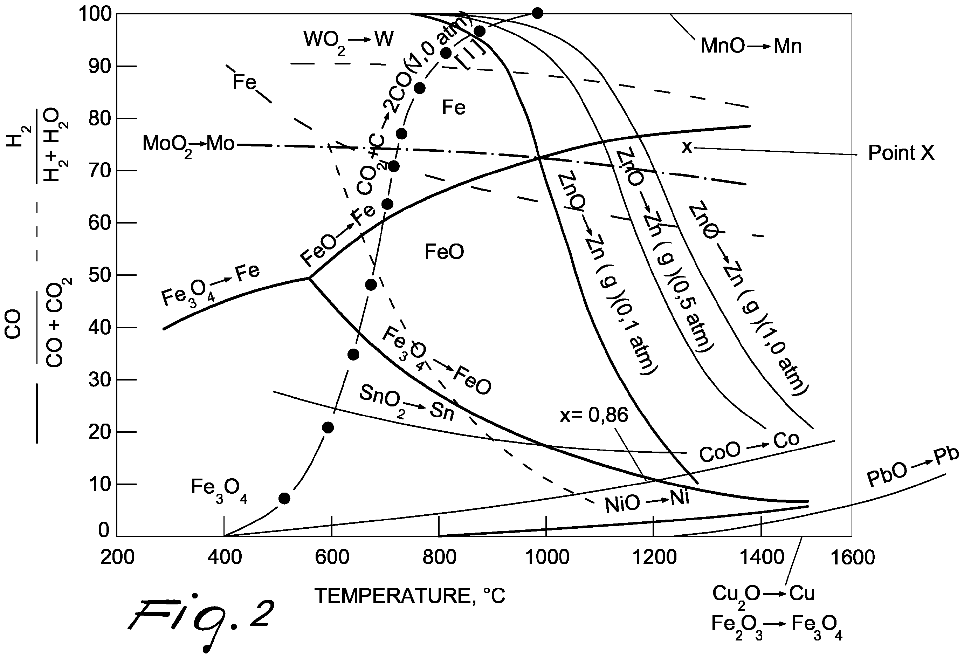

Shortly before (times of less than approximately 20 minutes) the system reaches the blueing temperature, the analysis and control system starts the step of the thermal treatment that consists in the passivation/blueing of the material. The analysis system stops sending to the furnace the mixture of nitrogen and at least one of hydrogen, carbon monoxide or mixtures thereof (syngas mixture), produced by a generator, and controls, by means of the gas control system, the opening only of the valves on the lines of nitrogen, carbon dioxide and/or nitrous oxide, adjusting their flows so that in order to obtain for example a passivation/blueing by means of formation of iron oxide, the CO content is for example comprised between 25% and 65% by weight on the weight of the mixture (CO+CO₂), with reference to the chart of Figure 2, which illustrates the range of formation of the iron oxide FeO as the temperature varies.

In this transition step also, the carbon potential is monitored continuously and kept constantly at the preset value.

Preferably, during the step b) of the method of the invention the composition of the atmosphere in step b) is adjusted on the basis of the percentages of CO and CO₂ by weight on the total weight of the atmosphere of the treatment furnace, detected by CO and CO₂ analyzers.

Preferably, in the atmosphere of the step b) the CO content is comprised between 20% and 80% by weight on the weight of the mixture (CO+CO₂), more preferably between 25% and 65% by weight on the weight of the mixture (CO+CO₂).

The flow-rates of nitrogen gas and at least one of carbon dioxide, nitrous oxide or mixtures thereof sent to the thermal treatment furnace are a function of the volume of the treatment chamber and of the volume of the load of material, and it has been verified that by means of the adjustment and control system of the invention times of less than 20 minutes (preferably 15 minutes) can be sufficient, with respect to the longer times usually used.

This time is sufficient to ensure the formation of FeO of such a thickness as to ensure the protection of the material against subsequent oxidation and it is contained to the point that the decarburizing effect of the carbon dioxide present in the atmosphere is not considered to be significant.

Preferably, in the method according to the present invention the composition of the atmosphere in step b) is adjusted on the basis of the partial pressure of oxygen of the atmosphere of the treatment furnace detected by pressure analyzers.

Preferably, in the method according to the present invention the partial pressure of oxygen in the atmosphere of step b) is comprised between 10⁻¹⁹ atm and 10⁻¹⁸ atm.

The method according to the present invention (termed Solmix B), due to its flexibility, is therefore economically convenient with respect to the background art and has a low environmental impact thanks to the short times for provision and the consequent lower emissions.

In another aspect, the present invention relates to an apparatus for such method that comprises, with reference to Figure 1, at least one gas mixing system 1, at least one furnace 3 for thermal treatment of carbon steel, at least one system 4 for analyzing and controlling the flow-rates of the gases and of the process parameters of the method, and optionally at least one catalytic reactor 2 which comprises means adapted to supply heat energy. Preferably, in the apparatus according to the invention the analysis and control system comprises means for detecting the concentration of carbon monoxide, carbon dioxide, methane and nitrous oxide and optionally the dew point and/or the concentration of oxygen, means for detecting and adjusting the temperature in the treatment furnace, means for determining and adjusting the flow-rates of the gases that enter the mixing system 1, the gases being one or more of nitrogen, carbon dioxide, nitrous oxide, oxygen and hydrocarbon, as a function of the type of thermal treatment and of the concentration of carbon monoxide, carbon dioxide, methane and nitrous oxide and optionally of the dew point and/or the concentration of oxygen, and of the temperature in the treatment furnace, as detected.

Preferably, in the apparatus according to the present invention the concentration detection means are selected among analyzers of carbon monoxide and carbon dioxide, oxygen probe, lambda-probe and combinations thereof.

Preferably, in the apparatus according to the present invention the analysis and control unit comprises a programmable logic controller (PLC), which is adapted to adjust the quantities/flow-rates of gases to be fed into the gas mixer so as to obtain a desired layer of carbides and oxide on the treated carbon steel, on the basis of information related to the treatment temperature and of the concentrations of the gases originating from CO, CO₂, CH₄ and nitrous oxide analyzers and to the O₂ content detected by the lambda-probe or oxygen probe.

In another aspect, the present invention relates to the treatment for the production of gears, valves and other parts made of carbon steel.

The process is applied in general for the production of metal parts in the automotive industry, for hydraulic systems, for earth-movers and for the production of all parts that have to be highly resistant to corrosion.

In another aspect, the present invention relates to parts made of carbon steel, particularly gears and valves obtained by means of the method for the treatment of a carbon steel.

## Claims

1. A method for the treatment of a carbon steel comprising the steps of:
a) at least one thermal treatment of the carbon steel, selected from carburizing, carbonitriding and tempering, performed in a treatment furnace;
b) a subsequent thermal treatment of passivation/blueing of the carbon steel treated in step a), said subsequent thermal treatment being performed directly in said furnace of the treatment of step a), at a temperature comprised between 800°C and 900°C, in an atmosphere comprising nitrogen and at least one of carbon dioxide, nitrous oxide, or mixtures thereof, wherein the composition of the atmosphere of the treatment furnace is adjusted by varying the flow-rates of nitrogen and at least one of carbon dioxide, nitrous oxide or mixtures thereof that enter a gas mixer to prepare a mixture of gas that is fed into said furnace during ste b).

2. The method according to claim 1, wherein during step b) the composition of the atmosphere of the treatment furnace is monitored and adjusted continuously.

3. The method according to one of claims 1 and 2, wherein the composition of the atmosphere of the treatment furnace in step b) is adjusted by means of a programmable logic controller (PLC).

4. The method according to any one of the preceding claims, wherein the composition of the atmosphere of the treatment furnace in step b) is analyzed by using an analyzer selected from a lambda-probe or an oxygen probe and is adjusted so that the value of the signal that originates from said analyzer is comprised between 870 mV and 960 mV.

5. The method according to one of the preceding claims, wherein the composition of the atmosphere in step b) is adjusted on the basis of the percentages of CO and CO₂ by weight on the total weight of the atmosphere of the treatment furnace, detected by CO and CO₂ analyzers.

6. The method according to one of the preceding claims, wherein in the atmosphere of step b) the CO content is comprised between 20% and 80% by weight on the weight of the mixture (CO+CO₂).

7. The method according to one of the preceding claims, wherein the composition of the atmosphere in step b) is adjusted on the basis of the partial oxygen pressure of the atmosphere of the treatment furnace detected by pressure analyzers.

8. The method according to any one of the preceding claims, wherein the treatment of step a) occurs in the presence of a gas mixture that comprises nitrogen and at least one of carbon monoxide, hydrogen or mixtures thereof, the method further comprising the detection and the continuous adjustment of the composition of the gas mixture during step a) so as to keep the carbon potential of the gas mixture at a preset value.

9. The method according to any one of the preceding claims, wherein the gas mixture that enters the treatment furnace in step a) is obtained in a catalytic reactor and the composition of the gas mixture that enters the thermal treatment furnace in step a) is adjusted by varying the flow-rate and the composition of a flow of gas that comprises nitrogen, oxygen, carbon dioxide and hydrocarbon entering said catalytic reactor, or by varying the flow-rates of the components of the gas flow that enters a gas mixer to prepare a mixture of gases that is fed into said catalytic reactor, preferably by means of a programmable logic controller (PLC).

10. An apparatus for the treatment of a carbon steel, comprising:
- at least one gas mixing system (1) to prepare a mixture of nitrogen and at least one of carbon dioxide, nitrous oxide or mixtures thereof,
- at least one furnace (3) for performing the steps of:
a) at least one thermal treatment of the carbon steel, selected from carburizing, carbonitriding and tempering;
b) a subsequent thermal treatment of passivation/blueing of the carbon steel treated in step a), said subsequent thermal treatment being performed directly in said furnace of the treatment of step a), at a temperature comprised between 800°C and 900°C, in an atmosphere comprising nitrogen and at least one of carbon dioxide, nitrous oxide, or mixtures thereof, wherein the composition of the atmosphere of the treatment furnace is adjusted by varying the flow-rates of nitrogen and at least one of carbon dioxide, nitrous oxide or mixtures thereof that enter a gas mixer to prepare a mixture of gas that is fed into said furnace during ste b),
- at least one system (4) for analyzing and controlling the flow-rates of the gases and the process parameters comprising
• means for detecting the concentration of carbon monoxide, carbon dioxide, methane and nitrous oxide and optionally the dew point and/or concentration of oxygen,
• means for detecting and adjusting the temperature in the treatment furnace,
• means for determining and adjusting the flow-rates of the gases that enter the mixing system (1), said gases being one or more of nitrogen, carbon dioxide, nitrous oxide, oxygen and hydrocarbon, as a function of the type of thermal treatment and of the concentration of carbon monoxide, carbon dioxide, methane and nitrous oxide and optionally of the dew point and/or of the concentration of oxygen, and of the temperature in the treatment furnace, as detected, and
- optionally at least one catalytic reactor (2) which comprises means adapted to supply heat energy.

11. The apparatus according to claim 10, wherein the concentration detection means are selected among analyzers of carbon monoxide and carbon dioxide, oxygen probe, lambda-probe and combinations thereof.

12. The apparatus according to one of claims 10 or 11, wherein the analysis and control unit comprises a programmable logic controller (PLC), which is adapted to adjust the quantities/flow-rates of gas to be fed into the gas mixer so as to obtain a desired layer of carbides and oxide on the treated carbon steel, on the basis of information related to the treatment temperature and of the concentrations of the gases provided by CO, CO₂ and CH₄ analyzers and to the O₂ content detected by the lambda-probe or oxygen probe.

13. The treatment method according to claims 1-9 for the treatment of carbon steel parts, particularly gears and valves.

## Patentansprüche

1. Verfahren für die Behandlung eines Kohlenstoffstahls, welches die Schritte umfasst:
a) mindestens eine Wärmebehandlung des Kohlenstoffstahls, ausgewählt aus Aufkohlen, Carbonitrieren und Anlassen, durchgeführt in einem Behandlungsofen;
b) eine nachfolgende Wärmebehandlung des Passivierens/Bläuens des in Schritt a) behandelten Kohlenstoffstahls, wobei besagte nachfolgende Wärmebehandlung direkt in besagtem Ofen der Behandlung von Schritt a) bei einer Temperatur, umfasst zwischen 800°C und 900°C, in einer Atmosphäre durchgeführt wird, welche Stickstoff und mindestens eines von Kohlendioxid, Distickstoffoxid oder Gemische daraus umfasst, wobei die Zusammensetzung der Atmosphäre des Behandlungsofens angepasst wird durch Variieren der Fließgeschwindigkeiten von Stickstoff und mindestens einem von Kohlendioxid, Distickstoffoxid oder Gemischen daraus, die in einen Gasmischer eintreten, um ein Gemisch aus Gas herzustellen, das während Schritt b) in besagten Ofen eingespeist wird.

2. Verfahren gemäß Anspruch 1, worin während Schritt b) die Zusammensetzung der Atmosphäre des Behandlungsofens kontinuierlich überwacht und angepasst wird.

3. Verfahren gemäß einem von Ansprüchen 1 und 2, worin die Zusammensetzung der Atmosphäre des Behandlungsofens in Schritt b) mittels einer speicherprogrammierbaren Steuerung (Programmable Logic Controller (PLC)) angepasst wird.

4. Verfahren gemäß einem der vorangehenden Ansprüche, worin die Zusammensetzung der Atmosphäre des Behandlungsofens in Schritt b) durch Verwenden eines Analysators analysiert wird, ausgewählt aus einer Lambdasonde oder einer Sauerstoffsonde, und angepasst wird, sodass der Wert des Signals, das von besagtem Analysator stammt, zwischen 870 mV und 960 mV umfasst ist.

5. Verfahren gemäß einem der vorangehenden Ansprüche, worin die Zusammensetzung der Atmosphäre in Schritt b) auf Grundlage der Prozentsätze von CO und CO₂ nach Gewicht bezogen auf das Gesamtgewicht der Atmosphäre des Behandlungsofens, nachgewiesen durch CO- und CO₂-Analysatoren, angepasst wird.

6. Verfahren gemäß einem der vorangehenden Ansprüche, worin in der Atmosphäre von Schritt b) der CO-Gehalt zwischen 20 Gew.-% und 80 Gew.-% bezogen auf das Gewicht des Gemisches (CO+CO₂) umfasst ist.

7. Verfahren gemäß einem der vorangehenden Ansprüche, worin die Zusammensetzung der Atmosphäre in Schritt b) auf Grundlage des Sauerstoffpartialdrucks der Atmosphäre des Behandlungsofens, nachgewiesen durch Druckanalysatoren, angepasst wird.

8. Verfahren gemäß einem der vorangehenden Ansprüche, worin die Behandlung von Schritt a) in Anwesenheit eines Gasgemisches stattfindet, das Stickstoff und mindestens eines von Kohlenmonoxid, Wasserstoff oder Gemische daraus umfasst, wobei das Verfahren ferner den Nachweis und die kontinuierliche Anpassung der Zusammensetzung des Gasgemisches während Schritt a) umfasst, um so das Kohlenstoffpotenzial des Gasgemisches bei einem voreingestellten Wert zu halten.

9. Verfahren gemäß einem der vorangehenden Ansprüche, worin das Gasgemisch, welches in Schritt a) in den Behandlungsofen eintritt, in einem katalytischen Reaktor erhalten wird, und die Zusammensetzung des Gasgemisches, das in Schritt a) in den Wärmebehandlungsofen eintritt, angepasst wird durch Variieren der Fließgeschwindigkeit und der Zusammensetzung eines Gasstroms, der Stickstoff, Sauerstoff, Kohlendioxid und Kohlenwasserstoff umfasst, welche in besagten katalytischen Reaktor eintreten, oder durch Variieren der Fließgeschwindigkeiten der Bestandteile des Gasstroms, der in einen Gasmischer eintritt, um ein Gemisch aus Gasen herzustellen, das in besagten katalytischen Reaktor eingespeist wird, vorzugsweise mittels einer speicherprogrammierbaren Steuerung (PLC).

10. Apparat für die Behandlung eines Kohlenstoffstahls, welcher umfasst:
- mindestens ein Gasmischsystem (1), um ein Gemisch aus Stickstoff und mindestens einem von Kohlendioxid, Distickstoffoxid oder Gemischen daraus herzustellen,
- mindestens einen Ofen (3) zum Durchführen der Schritte:
a) mindestens eine Wärmebehandlung des Kohlenstoffstahls, ausgewählt aus Aufkohlen, Carbonitrieren und Anlassen;
b) eine nachfolgende Wärmebehandlung des Passivierens/Bläuens des in Schritt a) behandelten Kohlenstoffstahls, wobei besagte nachfolgende Wärmebehandlung direkt in besagtem Ofen der Behandlung von Schritt a) bei einer Temperatur, umfasst zwischen 800°C und 900°C, in einer Atmosphäre durchgeführt wird, welche Stickstoff und mindestens eines von Kohlendioxid, Distickstoffoxid oder Gemische daraus umfasst, wobei die Zusammensetzung der Atmosphäre des Behandlungsofens durch Variieren der Fließgeschwindigkeiten von Stickstoff und mindestens einem von Kohlendioxid, Distickstoffoxid oder Gemischen daraus angepasst wird, die in einen Gasmischer eintreten, um ein Gemisch aus Gas herzustellen, das während Schritt b) in besagten Ofen eingespeist wird,
- mindestens ein System (4) zum Analysieren und Steuern der Fließgeschwindigkeiten der Gase und der Prozessparameter, welches umfasst:
- Mittel zum Nachweisen der Konzentration von Kohlenmonoxid, Kohlendioxid, Methan und Distickstoffoxid, und gegebenenfalls des Taupunkts und/oder der Konzentration von Sauerstoff,
- Mittel zum Nachweisen und Anpassen der Temperatur im Behandlungsofen,
- Mittel zum Bestimmen und Anpassen der Fließgeschwindigkeiten der Gase, die in das Mischsystem (1) eintreten, wobei besagte Gase eines oder mehrere von Stickstoff, Kohlendioxid, Distickstoffoxid, Sauerstoff und Kohlenwasserstoff sind, als Funktion der Art der Wärmebehandlung und der Konzentration von Kohlenmonoxid, Kohlendioxid, Methan und Distickstoffoxid und gegebenenfalls des Taupunkts und/oder der Konzentration von Sauerstoff, und der Temperatur im Behandlungsofen, wie nachgewiesen, und
- gegebenenfalls mindestens einen katalytischen Reaktor (2), welcher Mittel umfasst, welche adaptiert sind, um Wärmeenergie zu liefern.

11. Apparat gemäß Anspruch 10, worin die Konzentrationsnachweismittel ausgewählt sind aus Analysatoren von Kohlenmonoxid und Kohlendioxid, Sauerstoffsonde, Lambdasonde und Kombinationen daraus.

12. Apparat gemäß einem der Ansprüche 10 oder 11, worin die Analyse- und Steuereinheit eine speicherprogrammierbare Steuerung (PLC) umfasst, welche adaptiert ist, um die Mengen/Fließgeschwindigkeiten von in den Gasmischer einzuspeisendem Gas anzupassen, um so eine gewünschte Schicht an Carbiden und Oxid auf dem behandelten Kohlenstoffstahl auf der Grundlage von Informationen bezüglich Behandlungstemperatur und den Konzentrationen der Gase, geliefert durch CO-, CO₂- und CH₄-Analysatoren, und zum O₂-Gehalt, nachgewiesen durch die Lambdasonde oder Sauerstoffsonde, zu erhalten.

13. Behandlungsverfahren gemäß Ansprüchen 1-9 für die Behandlung von Kohlenstoffstahlteilen, insbesondere Getrieben und Ventilen.

## Revendications

1. Procédé de traitement d'un acier au carbone, comprenant les étapes suivantes :
a) au moins un traitement thermique de l'acier au carbone, choisi parmi une carburation, une carbonitruration et un revenu, réalisé dans un four de traitement,
b) et un traitement thermique ultérieur de passivation/bleuissage de l'acier au carbone traité dans l'étape (a), lequel traitement thermique ultérieur est réalisé directement dans ledit four du traitement de l'étape (a), à une température située entre 800 et 900 °C, dans une atmosphère comprenant de l'azote et au moins de l'un des dioxyde de carbone, oxyde nitreux et mélanges de ceux-ci, étant entendu que l'on ajuste la composition de l'atmosphère du four de traitement en faisant varier les débits des gaz, azote et dioxyde de carbone, oxyde nitreux ou leur mélange, qui entrent dans un mélangeur de gaz servant à préparer un mélange de gaz qui est envoyé dans ledit four pendant l'étape (b).

2. Procédé conforme à la revendication 1, dans lequel, au cours de l'étape (b), la composition de l'atmosphère du four de traitement est surveillée et ajustée en continu.

3. Procédé conforme à l'une des revendications 1 et 2, dans lequel, dans l'étape (b), la composition de l'atmosphère du four de traitement est ajustée au moyen d'un automate programmable industriel (API).

4. Procédé conforme à l'une des revendications précédentes, dans lequel, dans l'étape (b), la composition de l'atmosphère du four de traitement est analysée au moyen d'un analyseur choisi parmi une sonde lambda ou une sonde à oxygène, et ajustée de manière à ce que la valeur du signal qui provient dudit analyseur soit comprise entre 870 et 960 mV.

5. Procédé conforme à l'une des revendications précédentes, dans lequel, dans l'étape (b), la composition de l'atmosphère est ajustée en fonction des pourcentages de CO et de CO₂, en poids rapporté au poids total de l'atmosphère du four de traitement, détectés par des analyseurs à CO et CO₂.

6. Procédé conforme à l'une des revendications précédentes, dans lequel, dans l'atmosphère de l'étape (b), la teneur en CO se situe entre 20 et 80 %, en poids rapporté au poids du mélange CO + CO₂.

7. Procédé conforme à l'une des revendications précédentes, dans lequel, dans l'étape (b), la composition de l'atmosphère est ajustée en fonction de la pression partielle d'oxygène dans l'atmosphère du four de traitement, détectée par des analyseurs de pression.

8. Procédé conforme à l'une des revendications précédentes, dans lequel le traitement de l'étape (a) est réalisé en présence d'un mélange de gaz comprenant de l'azote et au moins de l'un des hydrogène, monoxyde de carbone et mélanges de ceux-ci, et lequel procédé comprend en outre le fait de détecter et d'ajuster en continu la composition du mélange de gaz au cours de l'étape (a), de manière à maintenir le potentiel en carbone du mélange de gaz à une valeur fixée au préalable.

9. Procédé conforme à l'une des revendications précédentes, dans lequel le mélange de gaz qui entre dans le four de traitement dans l'étape (a) est obtenu dans un réacteur catalytique, et l'on ajuste la composition du mélange de gaz qui entre dans le four de traitement thermique de l'étape (a) en faisant varier le débit et la composition du courant de gaz, comprenant de l'azote, de l'oxygène, du dioxyde de carbone et de l'hydrogène, qui entre dans ledit réacteur catalytique, ou en faisant varier les débits des composants du courant de gaz qui entrent dans un mélangeur de gaz où est préparé le mélange de gaz qui est envoyé dans ledit réacteur catalytique, de préférence au moyen d'un automate programmable industriel (API).

10. Appareillage de traitement d'un acier au carbone, comprenant :
- au moins un système mélangeur de gaz (1), servant à préparer un mélange d'azote et d'au moins l'un des dioxyde de carbone, oxyde nitreux et mélanges de ceux-ci ;
- au moins un four (3) servant à réaliser les étapes suivantes :
a) au moins un traitement thermique de l'acier au carbone, choisi parmi une carburation, une carbonitruration et un revenu,
b) et un traitement thermique ultérieur de passivation/bleuissage de l'acier au carbone traité dans l'étape (a), lequel traitement thermique ultérieur est réalisé directement dans ledit four du traitement de l'étape (a), à une température située entre 800 et 900 °C, dans une atmosphère comprenant de l'azote et au moins de l'un des dioxyde de carbone, oxyde nitreux et mélange de ceux-ci, étant entendu que l'on ajuste la composition de l'atmosphère du four de traitement en faisant varier les débits des gaz, azote et dioxyde de carbone, oxyde nitreux ou leur mélange, qui entrent dans un mélangeur de gaz, pour préparer un mélange de gaz qui est envoyé dans ledit four pendant l'étape (b) ;
- au moins un système (4) servant à analyser et à réguler les débits des gaz et les paramètres de procédé, comprenant :
- des moyens permettant de détecter les concentrations de monoxyde de carbone, de dioxyde de carbone, de méthane et d'oxyde nitreux, et en option, le point de rosée et/ou la concentration d'oxygène,
- des moyens permettant de détecter et d'ajuster la température dans le four de traitement,
- des moyens permettant de déterminer et d'ajuster les débits des gaz qui entrent dans le système mélangeur (1), lesquels gaz sont un ou plusieurs des azote, dioxyde de carbone, oxyde nitreux, oxygène et hydrocarbure, en fonction du type de traitement thermique et des valeurs détectées des concentrations de monoxyde de carbone, de dioxyde de carbone, de méthane et d'oxyde nitreux, et en option, du point de rosée et/ou de la concentration d'oxygène, et de la température dans le four de traitement ;
- et en option, au moins un réacteur catalytique (2) qui comporte des moyens adaptés pour fournir de l'énergie thermique.

11. Appareillage conforme à la revendication 10, dans lequel les moyens de détection de concentration sont choisis parmi des analyseurs de monoxyde de carbone et de dioxyde de carbone, une sonde à oxygène, une sonde lambda et les combinaisons de tels dispositifs.

12. Appareillage conforme à l'une des revendications 10 et 11, dans lequel l'unité d'analyse et de régulation comprend un automate programmable industriel (API) qui est adapté pour ajuster les quantités ou débits de gaz à envoyer dans le mélangeur de gaz de manière à ce que soit obtenue une couche voulue de carbures et d'oxyde sur l'acier au carbone traité, en fonction des informations concernant la température de traitement, les valeurs des concentrations de gaz fournies par les analyseurs à CO, CO₂ et CH₄, et la teneur en oxygène détectée par la sonde lambda ou la sonde à oxygène.

13. Procédé de traitement conforme à l'une des revendications 1 à 9, pour le traitement de pièces en acier au carbone, en particulier d'engrenages et de soupapes.
